# EUROPEAN PATENT APPLICATION

(11) **EP 4 614 745 A1**
(43) Date of publication of application: **10.09.2025**
(21) Application number: 24219901.6
(22) Date of filing: 13.12.2024
(51) Int. Cl.: H02G 3/14, H02G 3/18, H02G 3/12, H02G 3/08

(54) **SOCKET BOX FOR FLUSH-MOUNTING IN A FLOOR SURFACE AND INSTALLATION METHOD**

(30) Priority: 14.12.2023 BE 202306015; 28.03.2024 BE 202405181
(71) Applicant: Shiver nv, 8630 Veurne (BE)
(72) Inventor: Renson, Thibault, 8630 Veurne (BE)
(74) Representative: Brantsandpatents bv

(57) **Abstract**

The present invention relates to a socket box for flush-mounting in a floor surface, comprising a housing for placement in the floor surface, an electrical base element, a cover plate for covering an upper side of the housing, and a cover for closing an opening in the cover plate, wherein the base element is placed in the housing, wherein the base element is accessible through the opening in the cover plate, wherein the cover plate is attached to the housing, wherein the opening in the cover plate is the only opening in a top surface of the cover plate, and wherein viewed in a direction perpendicular to the top surface of the cover plate, the opening in the cover plate is free of screws or bolts for fastening the cover plate to the housing. The invention also relates to a method for incorporating a socket box in a floor surface and a use of the socket box and/or the method for incorporating a power socket.

## Description

### TECHNICAL DOMAIN

The invention relates to a socket box for flush mounting into a floor surface. The invention also relates to a method for flush-mounting a socket box in a floor surface and a use of the method and/or the socket box for flush-mounting a power socket in a floor surface.

### STATE OF THE ART

Socket boxes for flush-mounting in a floor surface are known from the prior art. These socket boxes are often embedded in the floor surface of larger spaces to provide, for instance, power sockets, network connections, and/or telephone connections at a point in the room where no wall is available for flush-mounting socket boxes. These socket boxes are particularly suitable for multipurpose spaces with a variable layout.

Such socket boxes have a housing that is built into in the floor surface. A cover plate is usually placed on the housing to cover it. The housing includes an opening to provide access to the power socket, network connection, and/or telephone connection. This opening can be closed with a cover. In certain known socket boxes, this cover is hinged to the cover plate. In the cover, passages for cables may optionally be provided at an edge, so that after connecting the cables in the socket box, the cover can be closed again. A disadvantage of these covers with cable entries is that dirt or moisture can enter the socket box through the cable entries. This is particularly disadvantageous for floor surfaces that are, for example, mopped.

In other known socket boxes, the cover is screwed into the opening in the cover plate. The cover seals the socket box watertight and is completely removed when a cable is connected to the socket box. Such covers usually include a groove for tightening and loosening the cover. This is disadvantageous because at the moment the cover needs to be tightened or loosened, a coin is not always available. Additionally, these known socket boxes are complex to install. For waterproofing reasons, the cover plate and the housing are firmly screwed together, and it is necessary to place and connect power sockets, network connections, and/or telephone connections in the housing beforehand, before the cover plate can be placed on the housing. With each repair, it is then necessary to disassemble the cover plate and the housing again, creating a problem with watertightness.

These known socket boxes have the additional disadvantage of having a considerable built-in size.

The present invention aims to find a solution to at least some of the above-mentioned problems or disadvantages.

### SUMMARY OF THE INVENTION

In a first aspect, the present invention relates to a socket box according to claim 1.

This socket box is advantageous because there are no screws or bolts on the top surface of the cover plate for attaching the cover plate to the housing. Water can seep into the socket box along such screws or bolts, which is avoided with this socket box. Such screws or bolts can also become filled with dirt or be damaged by load on the floor surface, making it difficult or impossible to remove the cover plate from the housing. Additionally advantageous is that, because no space for screws or bolts needs to be provided in the top surface of the cover plate, the cover plate can be made smaller, and the socket box thus has a limited built-in size. It is also advantageous that the opening in the cover plate is also free of screws or bolts for attaching the cover plate to the housing, allowing the opening to be limited to what is necessary for accessing the electrical base element. As a result, the cover plate and the socket can be made even smaller, further limiting the built-in size.

Preferred embodiments of the device are set out in claims 2 to 15.

In a second aspect, the present invention relates to a method according to claim 16.

This method has the advantage that no screws or bolts need to be screwed into the top surface of the cover plate to attach the cover plate to the housing. This prevents, for example, water from seeping into the socket box along such screws or bolts. Such screws or bolts can also become dirty or damaged, making it difficult or impossible to remove the cover plate from the housing. Additionally advantageous is that the top surface of the cover plate can be made smaller, and the socket box thus has a limited built-in size. It is also advantageous that the opening in the cover plate is also free of screws or bolts for attaching the cover plate to the housing, allowing the cover plate and the socket box to be made even smaller.

Preferred embodiments of the method are described in dependent claims 17 to 18.

In a third aspect, the present invention relates to a use according to claim 19.

This use results in an advantageous incorporation of the socket box in a floor surface, as only a limited built-in size is required, allowing a socket box to be incorporated in smaller floor surfaces.

### DESCRIPTION OF THE FIGURES

**Figure 1** shows an exploded view of a socket according to an embodiment of the present invention, for placement of an electrical base element.
**Figure 2** shows an exploded view of a socket according to an alternative embodiment of the present invention, for placement of an electrical base element.
**Figure 3** shows a perspective view of the socket from Figure 1, after placement of the electrical base element and before placement of a removable ring and a cover.
**Figure 4** shows a perspective view of the socket from Figure 3, after placement of the removable ring and before placement of the cover.
**Figure 5** shows a perspective view of the socket from Figure 4, after placement of the cover.
**Figure 6** shows a perspective view of the socket from Figure 5, during the opening of the cover using a plug.
**Figure 7** shows a perspective view of the socket from Figure 6, after placing the plug in the electrical base element.
**Figure 8** shows a perspective view of the socket from Figure 2, after placement of the cover.
**Figure 9** shows a perspective view of the socket from Figure 8, viewed from below.
**Figure 10** shows a top view of a socket according to an embodiment of the present invention.
**Figure 11** shows a top view of a socket according to another embodiment of the present invention.
**Figure 12** shows a top view of a socket according to yet another embodiment of the present invention.
**Figure 13** shows an exploded view of a socket with an electrical base element according to yet another alternative embodiment of the present invention.
**Figure 14** shows a perspective view of the socket from Figure 13, after placement of the cover.
**Figure 15** shows a side view of the socket from Figure 13.
**Figure 16** shows a cross-sectional view of the socket from Figure 13.

### DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

The terms "comprise," "comprising," "consist of," "consisting of," "provided with," "include," "including," "contain," "containing," are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In the context of this document, an indentation is a recess in a surface, where the surface is not pierced.

In the context of this document, an electrical base element is an element placed in a socket, where the electrical base element forms a connection point for an electrical cable and/or a signal cable, and where the connection point of the electrical base element is accessible through an opening in a cover plate of the socket box. Non-limiting examples of electrical base elements are power sockets, network connections, telephone connections, multimedia connections, etc.

In the context of this document, a flexible material is a material with a low modulus of elasticity. Preferably, the modulus of elasticity is less than 1 GPa, more preferably less than 0.5 GPa, even more preferably less than 0.1 GPa, and most preferably less than 0.05 GPa.

In the context of this document, a front wall is a wall of the electrical base element that, after installation of the socket box, is directed towards a user of the socket box and is closest to the user.

In a first aspect, the invention relates to a socket box for flush-mounting in a floor surface.

Non-limiting examples of floor surfaces are a concrete floor, a tiled floor, a cast floor, a plank floor, a linoleum floor, a floor covered with wall-to-wall carpet.

The socket box comprises a housing for placement in the floor surface, an electrical base element, a cover plate for covering an upper side of the housing, and a cover for closing an opening in the cover plate.

The housing is a hollow volume with a side wall, a bottom wall, and a predominantly open top wall. The side wall and the bottom wall are preferably closed walls. This is advantageous for the watertightness of the housing. Preferably, the top wall of the housing is completely open. The housing is preferably made of metal or plastic. Most preferably, the housing is made of plastic. The housing is preferably a predominantly cylindrical or predominantly beam-shaped volume. More preferably, the housing is a predominantly cylindrical volume. This is advantageous for placing the socket box in a floor surface, where a cylindrical opening is drilled in the floor surface. The housing includes in the bottom wall and/or in a side wall the one or more cable entries for routing a cable, such as an electrical cable, a network cable, a telephone cable, a speaker cable, a video cable, etc., into the housing. It is clear that an unused cable entry is preferably sealed, so that the side wall and/or the bottom wall are completely closed. The housing is located below the floor surface after the socket box is flush-mounted and at most is flush with the floor surface.

The cover plate is placed on or attached to the predominantly open top wall of the housing. The cover plate is fastened to the housing. The cover plate is clicked, screwed, glued, welded, or otherwise suitably attached to the housing. Preferably, the cover plate is screwed to the housing. After the socket box is flush-mounted in the floor surface, the cover plate covers the top of the housing. The cover plate preferably protrudes at most 3 mm from the floor surface after the socket is flush-mounted, more preferably at most 2 mm, even more preferably at most 1 mm, and most preferably is flush with the floor surface. The cover plate preferably has a circular, rectangular, or square top surface. More preferably, the cover plate is circular. The cover plate is preferably made of plastic or metal. Most preferably, the cover plate is made of metal.

The cover plate can also be attached to the housing because the cover plate and the housing are one indivisible unit, as in an embodiment described later.

The electrical base element is placed in the housing. For example, the electrical base element is screwed into the housing. In that case, the housing includes sleeves for receiving screws to fasten the electrical base element. In another embodiment, the electrical base element includes one or more clamps. Each of the one or more clamps includes a clamp screw. By tightening the clamp screws, each of the one or more clamps clamps against the side wall of the housing. The electrical base element can be fastened in the housing in another suitable way. The electrical base element is accessible through the opening in the cover plate. The opening in the cover plate is thus an access to the hollow volume formed by the housing. The opening in the cover plate is suitable for passing an electrical cable or a signal cable to the electrical base element.

The opening in the cover plate lies in a plane formed by the top surface of the cover plate and extends through the cover plate. A step may or may not be present in the opening, for example, to support the cover or for placing a seal.

The cover is suitable for closing the opening in the cover plate when no electrical cable or signal cable is connected to the electrical base element. The cover is preferably made of plastic or metal. More preferably, the cover is made of metal. Most preferably, the cover is made of the same material as the cover plate. The cover preferably protrudes at most 3 mm from the floor surface after the socket box is flush-mounted, more preferably at most 2 mm, even more preferably at most 1 mm, and most preferably is flush with the floor surface. The cover is hingedly attached to the cover plate, or the cover is removably attached to the cover plate or the housing with screws, or the cover and the cover plate include complementary threads, whereby the cover is removably screwed into the opening in the cover plate using the complementary threads, or the cover is removably attached to the cover plate or the housing in another suitable way. The cover preferably has a circular, rectangular, or square top surface. More preferably, the cover is circular. Preferably, the cover has a top surface with the same shape as the top surface of the cover plate.

According to a preferred embodiment, a top surface of the cover plate is free of screws or bolts. Seen in a direction perpendicular to the top surface of the cover plate, the opening in the cover plate is free of screws or bolts for fastening the cover plate to the housing or the electrical base element to the cover plate or the housing.

This embodiment is advantageous because it ensures that there are no screws or bolts on the surface of the cover plate for attaching the cover plate to the housing. Water could seep into the socket box along such screws or bolts, for example. This risk is thus avoided. Such screws or bolts can also become filled with dirt or be damaged by load on the floor surface, making it difficult or impossible to remove the cover plate from the housing. Additionally advantageous is that, because no space for screws or bolts needs to be provided in the top surface of the cover plate, the cover plate can be made smaller, and the socket box thus has a limited built-in size. Also advantageous is that the opening in the cover plate is also free of screws or bolts, allowing the opening to be limited to what is necessary to access the electrical base element. This allows the cover plate and the socket box to be made even smaller, further limiting the built-in size of the socket box.

According to a preferred embodiment, the cover plate is fastened to the housing. A top surface of the cover plate is free of screws or bolts. Seen in a direction perpendicular to the top surface of the cover plate, the opening in the cover plate is free of screws or bolts for fastening the cover plate to the housing.

This embodiment has a number of similar advantages as a previously described embodiment, where the top surface of the cover plate is free of screws or bolts. It is also advantageous that the opening in the cover plate is also free of screws or bolts for attaching the cover plate to the housing, allowing the opening to be limited to what is necessary for accessing the electrical base element. This allows the cover plate and the socket box to be made even smaller, further limiting the built-in size of the socket box.

According to a further embodiment, seen in a direction perpendicular to the top surface of the cover plate, the opening in the cover plate outside a perimeter of the electrical base element is free of screws or bolts for fastening the electrical base element to the cover plate or the housing.

This embodiment is advantageous because it allows the housing to fit more closely around the electrical base element, allowing the cover plate and the socket box to be made even smaller, further limiting the built-in size of the socket box.

According to an embodiment, the electrical base element includes one or more clamps. Each of the one or more clamps includes a clamp screw. By tightening the clamp screws, each of the one or more clamps clamps against the side wall of the housing and/or behind the cover plate. Preferably, the one or more clamp screws clamp behind the cover plate. This is advantageous for a firm removable attachment of the electrical base element in the socket box. The clamp screws are located in the electrical base element.

According to a further embodiment, the electrical base element includes a guide for each of the one or more clamps for guiding the at least one clamp, wherein the guide extends in a direction perpendicular to the top surface of the cover plate along the clamp screw of the at least one clamp. The guide is configured to prevent a rotational movement of a clamp around the clamp screw when the clamp is in the guide. The guide preferably has a U-shaped cross-section in a plane parallel to the top surface of the cover plate. When a clamp is in the guide, the clamp cannot rotate around the clamp screw when tightening the clamp screw, and the tightening results in a translation of the clamp to the top surface of the cover plate. This embodiment is particularly advantageous if the clamps clamp behind the cover plate.

According to an alternative embodiment, the one or more clamps include an axis of rotation parallel to the top surface of the cover plate. The axis of rotation is a real axis or a virtual axis. The one or more clamps can be folded out by tightening the clamp screw, whereby a clamp rotates around the rotation axis and one end of the clamp moves away from the housing. Preferably, the one or more clamps include barbs at the end. This alternative design of the one or more clamps is particularly suitable for clamping the electrical base element against a side wall of the housing. The clamps are particularly advantageous for removably fastening the electrical base element in the socket box with minimal use of space.

According to a preferred embodiment, the electrical base element is fastened in the housing or to the cover plate using one or more screws or bolts. Preferably, the housing or the cover plate includes sleeves with internal threads for screwing down the electrical base element. Preferably, the sleeves are metal sleeves. In the case of a plastic housing or cover plate, the metal sleeves are placed in the mold for casting the housing or cover plate during the manufacturing of the housing or cover plate, for example. The one or more screws or bolts are preferably located in the electrical base element. This embodiment is advantageous for a firm removable attachment of the electrical base element in the socket box.

According to an embodiment, the electrical base element includes a cover cap for each of the one or more clamps to cover the clamp screw of the one or more clamps. The cover cap is preferably made of a plastic or a synthetic rubber. This is advantageous since the clamp screws are therefore not visible in the opening of the cover plate. The clamp screws also do not pose a risk of electrocution.

According to an embodiment, the electrical base element includes a cover cap for the one or more screws or bolts for fastening the electrical base element. The cover cap is similar to that in a previously described embodiment and has similar advantages.

According to an alternative embodiment, the electrical base element includes a removable front wall. The front wall is removable through the opening in the cover plate. The front wall is, for example, clicked onto the electrical base element or fastened to the electrical base element with a bayonet connector. The clamp screw of the one or more clamps is hidden behind the front wall. This is advantageous since the clamp screws are therefore not visible in the opening of the cover plate. The clamp screws also do not pose a risk of electrocution.

According to an embodiment, the electrical base element includes a removable front wall. The front wall is removable through the opening in the cover plate. The one or more screws or bolts for fastening the electrical base element in the housing are hidden behind the front wall. The front wall is similar to that in a previously described embodiment and has similar advantages.

According to an embodiment, the electrical base element is a power socket. The power socket includes contact points for connecting a plug. After perpendicular projection onto the top surface of the cover plate, a center point of the clamp screw of the one or more clamps lies within an enveloping perimeter of a smallest possible insulation surface around the contact points of the power socket. The enveloping perimeter is a smallest possible circle in the top surface of the cover plate around the smallest possible insulation surface.

This embodiment is advantageous for obtaining an electrical base element with minimal dimensions, allowing the socket box to be made smaller as well. Regulations prescribe a minimum insulation surface around the contact points for each type of power socket. The enveloping perimeter of the smallest possible insulation surface around the contact points thus corresponds to a smallest possible diameter in the cover plate for incorporating a power socket in the socket box.

According to a preferred embodiment, the cover and the cover plate have a top surface with the same shape. Preferably, the cover and the cover plate are circular. The cover plate has transverse dimensions that are at most 20% larger than corresponding transverse dimensions of the cover, preferably at most 15% larger, more preferably at most 10% larger, even more preferably at most 5% larger, and even more preferably at most 2.5% larger. Transverse dimensions refer to sides of the rectangular top surface in the case of a rectangular top surface. In the case of a circular top surface, this is a diameter of the circular top surface. Corresponding transverse dimensions refer to transverse dimensions measured in the same direction and at the same position on both the cover plate and the cover. In the case of a rectangular top surface, long sides of the cover plate and long sides of the cover are corresponding transverse dimensions, as are short sides of the cover plate and short sides of the cover. In the case of a circular top surface, a diameter of the cover plate and a diameter of the cover are corresponding transverse dimensions.

This embodiment is advantageous because it results in a socket box with a limited built-in size. This allows a socket box to be built in on smaller floor surfaces. This is particularly advantageous for plank floors and tile floors, allowing the socket box to be built in in the middle of a single tile or a single plank. This avoids the risk of a part of the plank or tile breaking off. This is, for example, a real risk with a socket box placed at a transition between planks or tiles, often resulting in a very narrow part on one or both planks or tiles that breaks off under load on the floor surface. This embodiment is also particularly advantageous when clamping the socket box in a floor surface, as discussed later. When clamping the socket box at a transition between planks or tiles, there is a very real chance that the socket box will push the tiles or planks apart, causing the socket box to come loose.

Preferably, the transverse dimensions of the cover are at most 4 mm smaller than the corresponding transverse dimensions of the cover plate, more preferably at most 3 mm, even more preferably at most 2 mm, and even more preferably at most 1 mm.

According to a further embodiment, the cover has transverse dimensions that are at most 3 mm larger than corresponding transverse dimensions of the cover plate, preferably at most 2 mm larger, and even more preferably at most 1 mm. This embodiment has similar advantages to the previously described embodiment. This embodiment is particularly advantageous because it achieves a maximum limitation of the built-in size of the socket box.

According to a preferred embodiment, the top surface of the cover is at least 1 mm above the top surface of the cover plate, preferably at least 1.5 mm, more preferably at least 2 mm, even more preferably at least 2.5 mm, and even more preferably at least 3 mm. This is advantageous because when a part of the cover not only closes the opening but also covers the cover plate entirely or partially, the cover can have sufficient thickness so that it does not deform under load on the cover.

Preferably, the top surface of the cover is at most 6 mm above the top surface of the cover plate, more preferably at most 5 mm, and even more preferably at most 4 mm.

According to an embodiment, the cover has a circular top surface with a diameter of at least 54 mm and at most 80 mm.

Preferably, the circular top surface has a diameter of at least 55 mm, more preferably at least 56 mm, even more preferably 57 mm, even more preferably at least 58 mm, even more preferably at least 59 mm, and even more preferably at least 60 mm.

Preferably, the circular top surface has a diameter of at most 72 mm, more preferably at most 70 mm, even more preferably at most 69 mm, and even more preferably at most 68 mm.

This embodiment is advantageous because a cover with dimensions within the given range allows easy access to the electrical base element through the opening in the cover plate, while achieving minimal dimensions for building in the socket box.

According to a preferred embodiment, the cover and the cover plate include complementary threads. The cover is removably screwed into the opening in the cover plate using the complementary threads. This way, the opening in the cover plate is closed by the cover, but after unscrewing the cover, the electrical base element is still accessible. Preferably, the cover plate includes threads along a perimeter of the opening that are complementary to the threads included in the cover. The cover includes indentations for receiving a tool for tightening and loosening the cover in the opening of the cover plate. The tool includes pins of an electrical plug. Non-limiting examples of suitable plugs are plugs suitable for power sockets of type B, E, F, and G according to the standard IEC 60083:2015. Preferably, the tool is an electrical plug.

This socket box is particularly advantageous because no coin is necessary to tighten or loosen the cover. The cover can be tightened or loosened using an electrical plug thanks to the indentations in the cover. An electrical plug is almost always available, especially since a large number of the socket boxes are used for power sockets. In the case of a power socket, the cover is loosened because a plug needs to be connected, and the plug is at hand. The cover is tightened because a plug has just been removed from the power socket, and again the plug is at hand. Since they are indentations, the indentations do not affect the water-tightness of the socket.

According to a preferred embodiment, the cover and the cover plate include complementary threads. The cover is removably screwed into the opening in the cover plate using the complementary threads. This way, the opening in the cover plate is closed by the cover, but after unscrewing the cover, the electrical base element is still accessible. The cover plate includes threads along a perimeter of the opening that are complementary to the threads included in the cover. The cover at least partially covers the cover plate, preferably the cover completely covers the cover plate. The cover includes a cylindrical wall on a side facing the housing. The threads included in the cover are applied to an outer side of the mentioned cylindrical wall. The cylindrical wall extends perpendicular to the cover. This embodiment is particularly advantageous in embodiments where the cover at least partially covers the cover plate.

According to a further embodiment, a front wall of the electrical base element is located within the mentioned cylindrical wall when viewed in a direction perpendicular to the top surface of the cover plate. Because the front wall of the electrical base element lies within the cylindrical wall, it is possible to place the electrical base element high in the housing, even so that a front wall of the electrical base element is almost flush with the cover plate. This makes it easier to connect cables to the electrical base element.

According to a preferred embodiment, the electrical base element includes a front wall. The front wall is at a distance of at most 5 mm from the top surface of the cover plate. The distance is measured in a direction perpendicular to the top surface of the cover plate. Preferably, the front wall is at a distance of at most 4 mm from the top surface of the cover plate, more preferably at most 3 mm, even more preferably at most 2 mm, even more preferably at most 1 mm, and most preferably the front wall lies in the plane formed by the top surface of the cover plate.

This embodiment is particularly advantageous for power sockets of type B and G according to standard IEC 60083:2015. In such power sockets, there is no recess of a front wall, allowing, for example, a power supply of an electrical device to be placed against the front wall of the power socket. If the power socket is then placed deep in the socket box, it is not possible to insert the power supply through the opening in the cover plate into the power socket. This embodiment thus allows the power supply to be connected even in these cases. This embodiment is particularly advantageous in combination with a previously described embodiment where the front wall of the electrical base element is located within the cylindrical wall on the cover plate when viewed in a direction perpendicular to the top surface of the cover plate.

According to a preferred embodiment, the electrical base element is removable from the housing through the opening in the cover plate. This is advantageous because the cover plate does not need to be removed from the housing to remove the electrical base element from the housing, thus not compromising the water- and dust-tightness of the socket box. This embodiment is also advantageous for inspecting electrical connections on the electrical base element.

According to a preferred embodiment, the electrical base element is removably clicked into the housing through the opening in the cover plate from the top side. Preferably, the housing includes flexible arms on the side wall of the housing, and the electrical base element includes notches or cams for interacting with the flexible arms. Optionally, the flexible arms comprise barbs. Alternatively, the housing includes flexible arms with barbs on the bottom wall of the housing. It is clear that the housing can include both flexible arms on the side wall and on the bottom wall. It will also be apparent that embodiments where the flexible arms are included in the electrical base element and where the notches or cams for interacting with the flexible arms are included in the housing are also part of the described invention. In other words, in the description above, the flexible arms and the notches or cams for interacting with the flexible arms are interchangeable.

Alternatively, the previously described flexible arms are included in a fastening element. The fastening element has an inner perimeter suitable for receiving the electrical base element. The fastening element is placed in the housing and attached to the housing. Preferably, the fastening element is screwed into the housing. In that case, the housing includes sleeves for receiving screws to fasten the fastening element in the housing. The fastening element is preferably made of plastic. This embodiment is advantageous because it does not require complex molds for manufacturing the housing or slots in, for example, the side wall to create the flexible arms. These slots cut out a part of the side wall, which is then pre-tensioned inward as a flexible arm. By omitting the slots, the side wall remains closed, which is advantageous for the water-tightness of the housing.

The housing preferably includes stops on the side wall or the bottom wall of the housing to limit a translational movement of the electrical base element in a direction perpendicular to the opening in the cover plate and directed toward the housing. This prevents the electrical base element from being pushed deeper into the housing when pressing on the electrical base element while connecting an electrical cable or a signal cable.

Clicking the electrical base element removably into the housing through the opening in the cover plate is particularly advantageous because, after the housing and the cover plate are incorporated into the floor surface, it is possible to replace or reconnect the electrical base element without having to disassemble the housing and the cover plate. This eliminates the risk of water-tightness problems with the socket box due to repeated assembly and disassembly.

According to a further embodiment, there is a gap between the cover plate and the electrical base element. The gap is advantageous for removing the electrical base element from the housing. For example, the electrical base element can be removed from the housing by placing a tool in the gap that pushes away the flexible arms and clamps the electrical base element, after which the electrical base element can be removed from the housing. Preferably, the socket box includes a removable ring placed in the gap. The removable ring is advantageous for concealing the gap. In this way, no dirt can pass through the gap into the housing, and it is not suggested that the electrical base element can be removed by pushing the flexible arms out of the housing. The removable ring is preferably made of plastic or metal. Preferably, the removable ring is made of the same material as the cover plate, making the removable ring appear as one with the cover plate, further reducing the suggestion that the electrical base element is removable. Preferably, the removable ring includes a groove around its perimeter, in which a annular coil spring is placed for clamping the ring in the gap.

According to a preferred embodiment, the cover plate is screwed to the housing from below. The housing preferably includes sleeves outside the hollow volume of the housing for receiving screws to fasten the cover plate to the housing. The cover plate preferably includes sleeves or a cylindrical recess with internal threads on an underside for receiving the mentioned screws. Alternatively, the cover plate includes threaded rods on an underside perpendicular to the cover plate. By placing the threaded rods through the mentioned sleeves outside the hollow volume of the housing and screwing nuts onto the threaded rods, the cover plate is screwed to the housing from below.

A seal is present between the housing and the cover plate. The seal is advantageous for making a gap between the cover plate and the housing water- and dust-tight. The seal is, for example, a sealing ring made of natural rubber or synthetic rubber, such as styrene-1,3-butadiene rubber, placed between the cover plate and the housing. Alternatively, the seal is manufactured simultaneously with the housing by two-component injection molding. This means that the seal is attached to the housing. In this case, the seal is, for example, made of synthetic rubber, such as styrene-1,3-butadiene rubber. It is clear that if the cover plate is made of plastic, the seal can be manufactured simultaneously with the cover plate by two-component injection molding, whereby the seal is then attached to the cover plate.

Screwing the cover plate to the housing from below is advantageous because there are no visible screws on the top surface of the cover plate. Visible screws can be damaged by placing or moving objects on the floor surface, making it impossible to unscrew them. The visible screws can also be filled with dirt. The screws for fastening the cover plate to the housing could also be hidden under the cover. This is disadvantageous because the opening in the cover plate would need to be larger than strictly necessary for the electrical base element. This is not necessary with this embodiment in combination with sleeves outside the hollow volume of the housing. The housing anyway includes a thicker edge on which the cover plate can be placed. The sleeves can be incorporated into this thicker edge, so the housing does not need to be enlarged in size, while a minimal internal dimension for the housing is possible.

This embodiment is particularly advantageous in combination with a previously described embodiment where the electrical base element is removably clicked into the housing. This means that it is not necessary to disassemble the cover plate and the housing to repair or replace the electrical base element, allowing the electrical base element to be replaced or repaired even after the socket is installed in the floor surface, after which the screws fastening the cover plate to the socket are no longer accessible. Additionally advantageous is that the seal does not need to be replaced each time, which carries a risk of incorrect placement or damage to the seal.

This embodiment is also particularly advantageous in combination with a previously described embodiment where the electrical base element includes one or more clamps. The electrical base element is removably clamped in the housing. In this case, it is also not necessary to disassemble the cover plate and the housing to repair or replace the electrical base element.

According to an embodiment, the cover plate is screwed to the side wall of the housing. The cover plate preferably comprises upstanding lips or an upstanding wall on a lower surface. The upstanding lips or the upstanding wall include sleeves or cylindrical recesses with internal threads on a side facing the side wall of the housing for receiving screws to fasten the cover plate to the housing. The side wall of the housing preferably includes openings for passing the screws through.

Preferably, the cover plate includes an upstanding wall on the lower surface. The upstanding wall forms a closed perimeter. The upstanding wall preferably fits closely to the side wall of the housing. This means that the distance between the upstanding wall and the side wall is preferably at most 3 mm, more preferably at most 2 mm, even more preferably at most 1 mm, and even more preferably at most 0.5 mm. The upstanding wall includes cylindrical recesses with internal threads. The cylindrical recesses do not penetrate the upstanding wall. The upstanding wall thus still forms a closed perimeter. A seal is present between the upstanding wall and the side wall. The seal is advantageous for making a gap between the cover plate and the housing water- and dust-tight. The seal is preferably placed under the screws. This is advantageous because water can run through the openings in the side wall of the housing but not through the upstanding wall. The water runs along the housing to the seal.

The seal is, for example, a sealing ring made of natural rubber or synthetic rubber, such as styrene-1,3-butadiene rubber, placed between the cover plate and the housing. The seal is preferably placed in a groove in the upstanding wall or in the side wall of the housing. Alternatively, the seal is manufactured simultaneously with the housing by two-component injection molding. This means that the seal is attached to the housing. In this case, the seal is, for example, made of synthetic rubber, such as styrene-1,3-butadiene rubber. It is clear that if the cover plate is made of plastic, the seal can be manufactured simultaneously with the cover plate by two-component injection molding, wherein the seal is then attached to the upstanding wall of the cover plate.

This embodiment has similar advantages to a previously described embodiment where the cover plate is screwed to the housing from below.

According to an embodiment, the cover plate and the housing are one indivisible whole. The housing is, for example, a plastic part, and the cover plate is a metal part. The cover plate is placed as an insert in a mold for casting the housing during the casting of the housing. The cover plate can be a plastic part that is cast simultaneously with the housing in the mold. The cover plate and the housing are, for example, one indivisible metal part, preferably made of aluminum or stainless steel, more preferably aluminum. In that case, it is necessary to ground the socket box or apply an electrically insulating layer, such as a plastic coating. The insulating layer is preferably applied to the inside of the socket box.

This embodiment is advantageous because it allows the housing and the cover plate to be connected in a water-tight manner without using a seal.

According to an embodiment, the cover includes a flange. After securing the cover in the opening in the cover plate, the flange conceals the cover plate. Preferably, the cover is screwed into the opening in the cover plate. Preferably, in this embodiment, the cover plate is placed below the floor surface after the socket box is installed, and a top side of the cover is flush with the floor surface. Preferably, the cover and the cover plate have a circular perimeter. Preferably, the cover has a diameter that is at least equal to the diameter of the cover plate. Preferably, the cover has a diameter that is at most 2 mm larger than the diameter of the cover plate, more preferably at most 1 mm larger, even more preferably at most 0.5 mm larger, and even more preferably at most 0.25 mm larger.

This embodiment is advantageous because it does not require the cover plate and the cover to be made of the same material. Even if the cover and the cover plate are made of the same material, this embodiment is advantageous because a surface treatment of the cover and the cover plate does not need to be performed in an assembled state. For example, with a brushed surface where the cover is not secured in the opening in the cover plate during brushing, lines on the cover plate and the cover would not be aligned. Covers can be exchanged between socket boxes, making assembly and use of the socket boxes easier. Additionally advantageous is that the socket box has a smaller cross-section at the floor surface because no cover plate is required to extend alongside the cover.

According to a preferred embodiment, the socket box includes a seal for forming a water-tight closure between the cover and the cover plate. The seal is, for example, a sealing ring made of natural rubber or synthetic rubber, such as styrene-1,3-butadiene rubber. The seal is, for example, an O-ring or a flat ring. The seal is included in a groove in a perimeter of the cover. Alternatively, the seal is included in a groove around the opening in the cover plate. The seal is clamped between the cover and the cover plate after securing the cover in the opening in the cover plate. Preferably, the cover is screwed into the opening in the cover plate. The seal is advantageous for making the socket box water- and dust-tight when the cover is secured in the opening in the cover plate.

According to a preferred embodiment, the cover and the cover plate include complementary threads. The cover is removably screwed into the opening in the cover plate using the complementary threads. The complementary threads are as described in other embodiments. The socket box includes a seal for forming a watertight closure between the cover and the cover plate. The seal is positioned outside a perimeter of the complementary threads. The seal is, for example, a sealing ring made of natural rubber or synthetic rubber, such as styrene-1,3-butadiene rubber. The seal is, for example, an O-ring or a flat ring. This embodiment is particularly advantageous in combination with an embodiment where the cover includes a flange. The seal is included in a groove in the cover plate or in a groove in the flange. The seal is clamped between the cover plate and the flange of the cover after securing the cover.

According to an embodiment, the housing includes one or more cable entries. The one or more cable entries are located in the side wall and/or the bottom wall of the housing. Used cable entries include a gland for making the cable entries water- and dust-tight when passing a cable through the cable entry. The cable entries are preferably break-out parts in the housing. Unused cable entries remain closed as a result. Alternatively, the cable entries are fixed openings in the housing. Unused cable entries are preferably sealed with a plug in that case. This embodiment is advantageous for preventing moisture and/or dust from entering the housing through the cable entries.

According to a preferred embodiment, the housing includes one or more cable entries. The one or more cable entries are located in the side wall and/or the bottom wall of the housing. The one or more cable entries are sealed with a pierceable membrane. The pierceable membrane is, for example, made of natural or synthetic rubber, such as styrene-1,3-butadiene rubber. The pierceable membrane is, for example, part of a closure that is clamped in an opening in the housing or placed over an opening, wherein the closure is glued, screwed, welded, or otherwise suitably attached to the housing. Preferably, the membrane is manufactured simultaneously with the housing by two-component injection molding. When passing a cable through the cable entry, the cable is pierced through the membrane, after which the membrane closes around the cable. This prevents moisture and/or dust from entering the housing through the cable entries. Additionally advantageous is that when a cable entry is not used, no plug needs to be placed in the cable entry. The plug cannot be forgotten.

According to a preferred embodiment, the cover plate has a height of at least 6 mm, preferably at least 8 mm, and more preferably at least 10 mm. The cover plate has a smooth perimeter over its entire height. The housing, viewed in a direction perpendicular to the cover, falls within the smooth perimeter of the cover plate after the cover is secured in the opening in the cover plate. Preferably, the cover is screwed into the opening in the cover plate.

This embodiment is advantageous for installing the socket box in a tile floor, cast floor, concrete floor, and the like. The socket box is placed on a base, after which the cast floor or concrete floor is poured around the socket box. Due to the smooth perimeter, the cast floor or concrete floor can neatly connect to the socket, preventing cavities from forming around the cover plate just below the floor surface. The housing can include ribs, texture, protrusions, or a combination of these elements on an outer surface, allowing the cast floor or concrete floor to adhere better to the housing. Since the housing falls within the smooth perimeter of the housing, any cavities that form between the housing and the cast floor or concrete floor are covered by the cover plate, preventing damage to the floor surface. In a tile floor, the socket box is placed on a base, after which a screed is applied around the socket box. The screed is, for example, a layer of screed. The same advantages regarding adhesion to the housing and cavities apply to a tile floor. Tiles are placed on the screed. The smooth perimeter of the cover plate is advantageous because the tiles around the cover plate can be cut straight in a direction perpendicular to the tiles. Due to the smooth perimeter, the tiles will fit closely to the cover plate.

Additionally advantageous is that the cover plate is also easy to manufacture due to the smooth perimeter. A height of at least 6 mm is also advantageous in combination with a previously described embodiment where the cover plate is screwed to the housing from below. The cover plate then has sufficient height to accommodate the screws with which the cover plate is screwed to the housing.

According to an alternative embodiment, the cover plate includes flexible protrusions distributed over a height of at least 6 mm. Preferably, the cover plate includes flexible protrusions distributed over a height of at least 8 mm, more preferably over a height of at least 10 mm. The protrusions are regularly distributed along a perimeter of the cover plate. The perimeter is circular. The protrusions extend along the perimeter of the cover plate. The protrusions form continuous rings or interrupted rings. Preferably, the protrusions form interrupted rings. The protrusions are made of a flexible material.

In a plastic cover plate, the cover plate is preferably made of a first plastic material and a second plastic material. The first plastic material is a non-flexible material. The second plastic material is a flexible material. It is clear that the protrusions are made of the second material. The first plastic material and the second plastic material are preferably applied simultaneously in one mold for manufacturing the cover plate, for example, by two-component injection molding.

In the case of a cover plate made of metal, the protrusions are preferably formed from a flexible plastic material. The protrusions are, for example, part of one or more strips or a ring made of the plastic material. The one or more strips or the ring are applied along the perimeter of the cover plate. The one or more strips or the ring are glued, screwed, or otherwise suitably attached along the perimeter of the cover plate. Preferably, the one or more strips or the ring are screwed along the perimeter of the cover plate.

The housing, viewed in a direction perpendicular to the cover, falls within the perimeter of the cover plate after the cover is secured in the opening in the cover plate. It is clear from the preceding description that the protrusions fall outside the perimeter of the cover plate.

This embodiment is advantageous for installing the socket box in, for example, a plank floor. By drilling a circular opening in the plank floor and because the housing falls within the perimeter of the cover plate, the socket box can be placed through the circular opening in the plank floor. The flexible protrusions ensure that the socket box is clamped in the plank floor. It is not necessary to glue the socket box in place. If necessary, the socket box can be pulled out of the circular opening again. A height of at least 6 mm is also advantageous in combination with a previously described embodiment where the cover plate is screwed to the housing from below. The cover plate then has sufficient height to accommodate the screws with which the cover plate is screwed to the housing.

According to an embodiment, the side wall of the housing includes flexible protrusions distributed over a height of at least 6 mm. Preferably, the housing includes flexible protrusions distributed over a height of at least 8 mm, more preferably over a height of at least 10 mm. The protrusions are located near the top wall of the housing. Preferably, there is a distance of at most 10 mm, more preferably at most 8 mm, even more preferably at most 6 mm, and even more preferably at most 4 mm between the protrusions closest to the top wall and the top wall. The distance is measured in a direction perpendicular to the top surface of the cover plate. The protrusions are regularly distributed along a perimeter of the housing. The perimeter is circular. The protrusions extend along the perimeter of the housing. The protrusions form continuous rings or interrupted rings. Preferably, the protrusions form interrupted rings. The protrusions are made of a flexible material.

The housing, viewed in a direction perpendicular to the cover, falls within the perimeter of the cover plate after the cover is secured in the opening in the cover plate. It is clear from the preceding description that the protrusions fall outside the perimeter of the cover plate.

In a plastic housing, the housing is preferably made of a first plastic material and a second plastic material. The first plastic material is a non-flexible material. The second plastic material is a flexible material. It is clear that the protrusions are made of the second material. The first plastic material and the second plastic material are preferably applied simultaneously in one mold for manufacturing the housing, for example, by two-component injection molding.

This embodiment has similar advantages to previously described embodiments with similar protrusions. This embodiment is particularly advantageous in combination with a previously described embodiment, wherein the cover plate is screwed to the side wall of the housing.

According to a preferred embodiment, the electrical base element is a power socket. The indentations in the cover correspond to a plug for the power socket. This means that the indentations are suitable for receiving pins of a plug that is suitable for the power socket. This allows the cover to be easily tightened or loosened with the plug.

The power socket is preferably a type B, E, F, or G power socket according to the standard IEC 60083:2015.

It will be apparent to a person skilled in the art that a socket box for flush-mounting in a floor surface according to the first aspect is also suitable for installation in other surfaces where water- and dust-tightness are essential, such as exterior walls and furniture, particularly garden and street furniture.

In a second aspect, the invention relates to a method for flush mounting a socket box in a floor surface.

The method includes the steps of:
- placing a housing and a cover plate of the socket box in a floor surface,
- placing an electrical base element through an opening in the cover plate into the housing, and
- closing the opening in the cover plate with a cover.

The cover plate is placed on or attached to the housing. The cover plate is clicked, screwed, glued, welded, or otherwise suitably attached to the housing. Preferably, the cover plate is screwed to the housing. The cover plate protrudes at most 3 mm from the floor surface, preferably at most 2 mm, even more preferably at most 1 mm, and most preferably the cover plate is flush with the floor surface.

The cover plate can also be attached to the housing because the cover plate and the housing are one indivisible unit, as in a previously described embodiment.

The electrical base element is accessible through the opening in the cover plate. The opening in the cover plate is thus an access to a hollow volume formed by the housing. The opening in the cover plate is suitable for passing an electrical cable or a signal cable to the electrical base element.

The cover is suitable for closing the opening in the cover plate when no electrical cable or signal cable is connected to the electrical base element. The cover preferably protrudes at most 3 mm from the floor surface, more preferably at most 2 mm, even more preferably at most 1 mm, and most preferably the cover is flush with the floor surface.

According to a preferred embodiment, a top surface of the cover plate is free of screws or bolts. The cover plate is preferably attached to the housing. The cover plate is clicked, screwed, glued, welded, or otherwise suitably attached to the housing. Preferably, the cover plate is screwed to the housing. Seen in a direction perpendicular to the top surface of the cover plate, the opening in the cover plate is free of screws or bolts for fastening the cover plate to the housing or the electrical base element to the cover plate or the housing.

This embodiment is advantageous because no screws or bolts need to be screwed into the top surface of the cover plate to attach the cover plate to the housing. This prevents, for example, water from seeping into the socket box along such screws or bolts. Such screws or bolts can also become dirty or damaged, making it difficult or impossible to remove the cover plate from the housing. Additionally advantageous is that the top surface of the cover plate can be made smaller, and the socket box thus has a limited built-in size. Also advantageous is that the opening in the cover plate is also free of screws or bolts, allowing the cover plate and the socket box to be made even smaller.

According to a preferred embodiment, a top surface of the cover plate is free of screws or bolts. Seen in a direction perpendicular to the top surface of the cover plate, the opening in the cover plate is free of screws or bolts for fastening the cover plate to the housing.

This embodiment has a number of similar advantages as a previously described embodiment, where the top surface of the cover plate is free of screws or bolts. It is also advantageous that the opening in the cover plate is also free of screws or bolts for attaching the cover plate to the housing, allowing the opening to be limited to what is necessary for accessing the electrical base element.

According to a further embodiment, seen in a direction perpendicular to the top surface of the cover plate, the opening in the cover plate outside a perimeter of the electrical base element is free of screws or bolts for fastening the electrical base element to the cover plate or the housing.

This embodiment is advantageous because it allows the housing to fit more closely around the electrical base element, allowing the cover plate and the socket box to be made even smaller, further limiting the built-in size of the socket box.

According to a preferred embodiment, the cover and the cover plate have a top surface with the same shape, wherein the cover plate has transverse dimensions that are at most 20% larger than corresponding transverse dimensions of the cover.

This embodiment is advantageous because it results in a socket box with a limited built-in size. This allows a socket box to be built in on smaller floor surfaces. This is particularly advantageous for plank floors and tile floors, allowing the socket box to be built in in the middle of a single tile or a single plank. This embodiment is also particularly advantageous when clamping the socket box in a floor surface, as in a later described embodiment of the method.

According to a preferred embodiment, the cover and the cover plate include complementary threads. The cover includes indentations for receiving pins of an electrical plug. The cover is screwed into the opening in the cover plate using a tool. The tool includes pins of an electrical plug. The pins of the tool are placed in the indentations in the cover. Preferably, the tool is an electrical plug.

This method has the advantage, among others, that the cover can be placed without using a coin, so that after the electrical base element is placed, the installation can be completed by simply tightening the cover with an electrical plug, which is almost always available. This is certainly the case if the electrical base element is a power socket and the power socket has been tested with an electrical device after installation.

According to a preferred embodiment, the electrical base element is removably clicked into the housing.

This embodiment is particularly advantageous because, after the housing and the cover plate are installed in the floor surface, it is possible to replace or reconnect the electrical base element without having to disassemble the housing and the cover plate. This eliminates the risk of water-tightness problems with the socket box due to repeated assembly and disassembly.

According to a preferred embodiment, the electrical base element is removably clamped in the housing. The electrical base element includes one or more clamps. Each of the one or more clamps includes a clamp screw. The clamp screws are tightened, whereby each of the one or more clamps clamps against the side wall of the housing and/or behind the cover plate. This embodiment has similar advantages to a previously described embodiment where the electrical base element is removably clicked into the housing.

According to a preferred embodiment, before placing the housing and the cover plate in the floor surface, the cover plate is placed on the housing. A seal is provided between the cover plate and the housing. The seal is advantageous for making a gap between the cover plate and the housing water- and dust-tight. The seal is, for example, a sealing ring made of natural rubber or synthetic rubber, such as styrene-1,3-butadiene rubber, placed between the cover plate and the housing. Alternatively, the seal is a part of the housing or the cover plate that is fixed to the housing or the cover plate, respectively. The cover plate is screwed from below.

Screwing the cover plate to the housing from below is advantageous because there are no visible screws on the top surface of the cover plate. Visible screws can be damaged by placing or moving objects on the floor surface, making it impossible to unscrew them. The visible screws can also be filled with dirt. This embodiment is also advantageous for obtaining a smaller socket box, as no space for screws needs to be provided on the top surface of the socket box.

This embodiment is particularly advantageous in combination with a previously described embodiment where the electrical base element is removably clicked into the housing. This means that it is not necessary to disassemble the cover plate and the housing to repair or replace the electrical base element, even after the socket box is installed in the floor surface. Additionally advantageous is that the seal does not need to be replaced each time, which carries a risk of incorrect placement or damage to the seal.

According to a preferred embodiment, the socket box is clamped in the floor surface. Preferably, the cover plate includes flexible protrusions along a perimeter of the cover plate for this purpose. A circular opening is drilled in the floor surface. The socket box is placed through the circular opening in the plank floor. The flexible protrusions ensure that the socket box is clamped in the floor surface. It is not necessary to glue the socket box in place. If necessary, the socket box can be pulled out of the circular opening again. This embodiment is particularly advantageous for installing the socket box in a plank floor.

According to an alternative embodiment, the socket box is cast into the floor surface. The socket box is placed on a base. The material for forming the floor surface is poured around the socket box. This embodiment is advantageous for installing the socket box in a tile floor, cast floor, concrete floor, and the like.

According to a preferred embodiment, the cover plate is placed recessed in the floor surface. The top surface of the cover plate is preferably flush with the floor surface. In embodiments where the cover at least partially covers the cover plate, the top surface of the cover is preferably flush with the floor surface. A front wall of the electrical base element is at most 5 mm lower than the floor surface, preferably at most 4 mm, more preferably at most 3 mm, even more preferably at most 2 mm, and even more preferably at most 1 mm.

This embodiment is particularly advantageous for power sockets of type B and G according to standard IEC 60083:2015. In such power sockets, there is no recess of a front wall, allowing, for example, a power supply of an electrical device to be placed against the front wall of the power socket. If the power socket is then placed deep in the socket box, it is not possible to insert the power supply through the opening in the cover plate into the power socket. This embodiment thus allows the power supply to be connected even in these cases.

One skilled in the art will appreciate that a method according to the second aspect is preferably carried out with a socket box according to the first aspect and that a socket box according to the first aspect is preferably suitable for carrying out a method according to the second aspect. Each feature described in this document, both above and below, can therefore relate to any of the three aspects of the present invention.

In a third aspect, the invention relates to a use of a socket box according to the first aspect and/or a method according to the second aspect for installing a power socket in a floor surface.

This use results in an advantageous incorporation of the socket box in a floor surface, as only a limited built-in size is required, allowing a socket box to be incorporated in smaller floor surfaces.

The use is particularly advantageous in combination with an embodiment of the socket box or the method where the cover includes indentations. This results in a simplified connection of an electrical device to the power socket. When connecting, the cover of the socket box can be immediately loosened with an electrical plug of the electrical device. There is no need to search for a suitable coin. When disconnecting the electrical device, the same plug can be used to tighten the cover. The same advantage is present when installing the socket box itself, as a power socket is often tested with an electrical device after installation.

In what follows, the invention is described by way of non-limiting figures illustrating the invention, and which are not intended to and should not be interpreted as limiting the scope of the invention.

### DESCRIPTION OF THE FIGURES

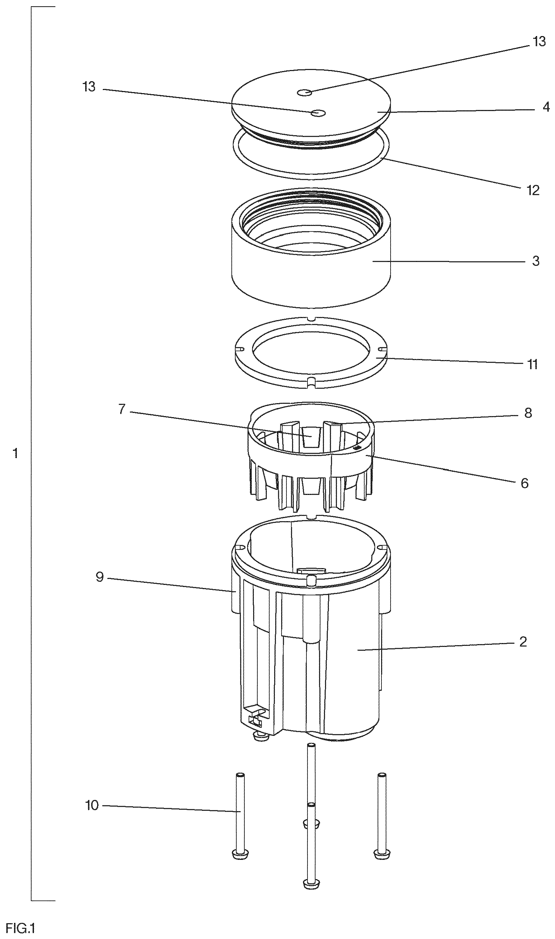

**Figure 1** shows an exploded view of a socket according to an embodiment of the present invention, for placement of an electrical base element.

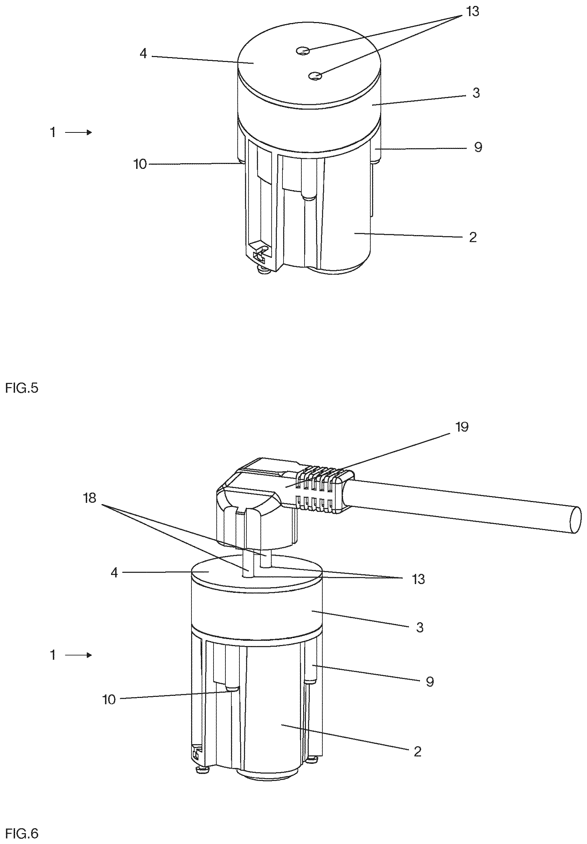

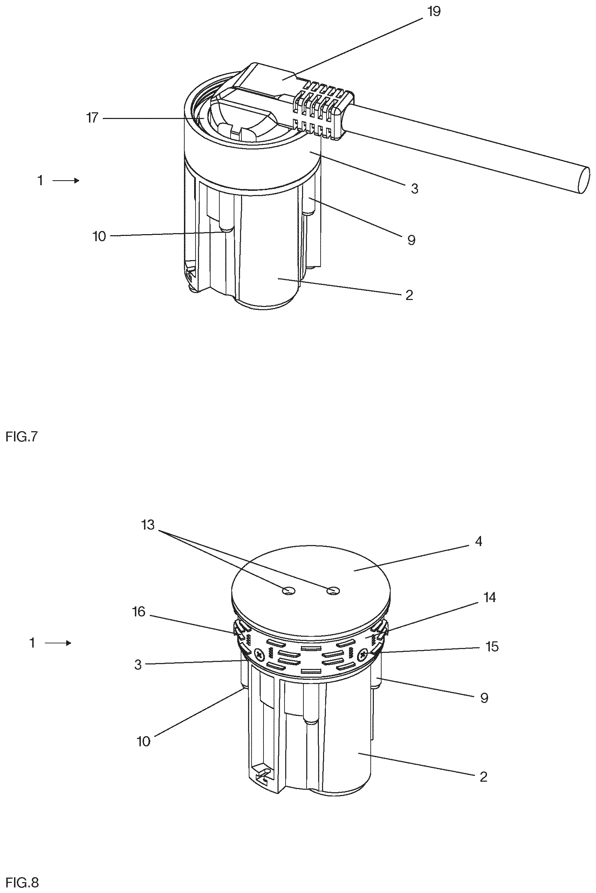

The socket (1) comprises a housing (2) for placement in a floor surface, an electrical base element (5), a cover plate (3) for covering an upper side of the housing (2), and a cover (4) for closing an opening in the cover plate (3). The cover (4) has a top surface with a diameter of 60 mm. The cover plate (3) has the same diameter. The corresponding transverse dimensions of the cover (4) and the cover plate (3) are equal in this embodiment. The electrical base element (5) is not shown in Figure 1. The housing (5) is made of plastic. The housing (5) comprises a closed bottom wall, a closed side wall, and an open top wall. A fastening element (6) is placed in the housing (2). The fastening element (6) comprises flexible arms (7) for clicking the electrical base element (5) into place. The fastening element (6) comprises cams (8) for supporting the electrical base element (5). A cover plate (3) is placed on the housing (2). In this embodiment, the cover plate (3) is a metal ring with an internal thread that is complementary to a thread included in the cover (4). A seal (11) is placed between the cover plate (3) and the housing (2). The seal (11) provides a water- and dust-tight seal of a gap between the cover plate (3) and the housing (2). The cover plate (2) is screwed to the housing (2) from below with screws (10). The housing comprises sleeves (9) through which the screws (10) extend. The cover (4) includes an O-ring (12) for forming a watertight seal between the cover (4) and the cover plate (3). The cover (4) can be screwed into the opening in the cover plate (4) using the complementary thread. The cover (4) includes indentations (13) for receiving pins (18) of a plug (19). The plug (19) is not shown in Figure 1, but is visible later in Figures 6 and 7. The cover (3) can be tightened and loosened using the pins (18) of the plug (19). This embodiment is particularly suitable for casting into, for example, a cast floor or a concrete floor or for placement in, for example, a tiled floor.

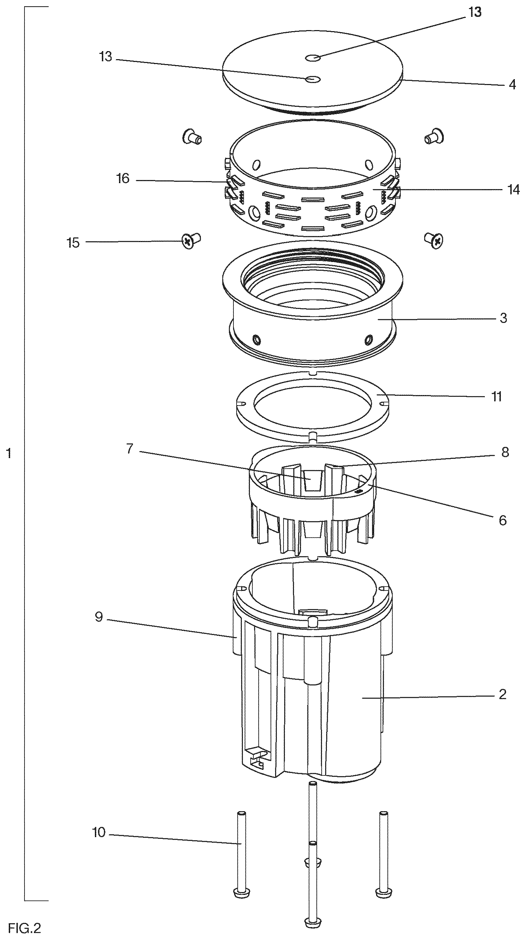

**Figure 2** shows an exploded view of a socket according to an alternative embodiment of the present invention, for placement of an electrical base element.

The flush-mounted box (1) from Figure 2 is very similar to the flush-mounted box (1) from Figure 1. The description of Figure 1 also applies to the similar elements in Figure 2. A major difference is that in this alternative embodiment, the cover plate (3) includes flexible protrusions (16) distributed over a height of at least 10 mm. The flexible protrusions (16) are part of a ring (14) made of flexible material. The ring (14) is attached to the cover plate (3) using screws (15). The flexible protrusions (16) are regularly distributed along a circumference of the cover plate (3). The flexible protrusions (16) thus form multiple superimposed interrupted rings. This embodiment is particularly suitable for clamping in, for example, a plank floor. The cover (4) in this embodiment has a top surface with a diameter of 68 mm. The cover plate (3) has the same diameter. The corresponding transverse dimensions of the cover (4) and the cover plate (3) are also equal in this embodiment.

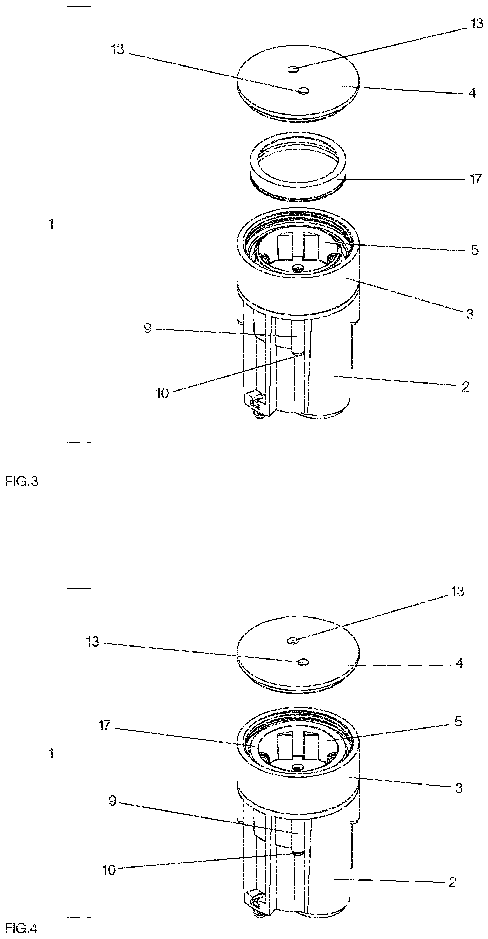

**Figure 3** shows a perspective view of the socket from Figure 1, after placement of the electrical base element and before placement of a removable ring and a cover.

The electrical base element (5) in this embodiment is a type E power socket according to the IEC 60083:2015 standard. It is clear that other types of power sockets are also suitable for incorporation in the housing (2). The electrical base element (5) is clicked into the fastening element (6) in the housing (2) through the opening in the cover plate (3). The electrical base element (5) is accessible through the opening in the cover plate (3). There is a gap between the electrical base element (5) and the cover plate (3). The socket box (1) further includes a removable ring (17) for concealing the gap. The removable ring (17) has not yet been placed. What is visible is that the removable ring (17) includes a groove. The groove is suitable for accommodating an annular coil spring for removably securing the removable ring (17) in the gap. The annular coil spring is not shown in Figure 3.

**Figure 4** shows a perspective view of the socket from Figure 3, after placement of the removable ring and before placement of the cover.

In Figure 4, the removable ring (17) is placed in the housing. The removable ring (17) is removably secured in the gap by the annular coil spring. There remains a free space between the removable ring (17) and the cover plate (3) so that the cover (4) can be screwed into the opening of the cover plate (3).

**Figure 5** shows a perspective view of the socket from Figure 4, after placement of the cover.

The cover (4) is screwed into the opening in the cover plate (3). The cover (4) includes a flange that conceals the cover plate (3). This means that after flush-mounting the socket box (1) in a floor surface, viewed in a direction perpendicular to the cover (4), the cover plate (3) is not visible. The floor surface is not shown in Figure 5. The cover (4) has a circular top surface with a diameter of 60 mm. The cover plate (3) has a height of at least 10 mm. The cover plate (3) has a smooth perimeter over its entire height. This smooth perimeter is concealed by the floor surface after flush-mounting in the floor surface. The housing (2), viewed in the direction perpendicular to the cover (4), falls within the smooth perimeter of the cover plate (3).

**Figure 6** shows a perspective view of the socket from Figure 5, during the opening of the cover using a plug.

Figure 6 clearly shows how the pins (18) of the plug (19) are received in the indentations (13) of the cover (4). This allows the cover (4) to be tightened and loosened using the pins (18) of the plug (19). The plug (19) is a plug suitable for type E and F power sockets according to the IEC 60083:2015 standard.

**Figure 7** shows a perspective view of the socket from Figure 6, after placing the plug in the electrical base element.

Figure 7 shows how the cover (4) is removed and the plug (19) is inserted through the opening in the cover plate into the power socket.

**Figure 8** shows a perspective view of the socket from Figure 2, after placement of the cover.

In this embodiment as well, the cover (4) includes a flange that conceals the cover plate (3). The cover (4) has a circular top surface with a diameter of 68 mm. Again, the housing (2), viewed in the direction perpendicular to the cover (4), falls within the perimeter of the cover plate (3).

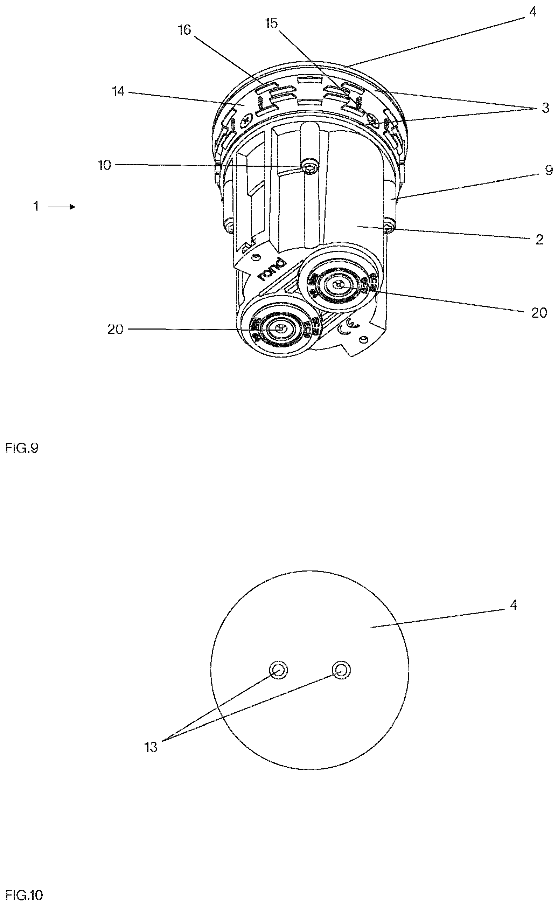

**Figure 9** shows a perspective view of the socket from Figure 8, viewed from below.

Figure 9 shows that the housing (2) comprises two cable entries (20). The two cable entries (20) are located in the bottom wall of the housing (2). The two cable entries (20) are sealed with a pierceable membrane. This keeps the bottom wall a closed wall in the absence of a cable to the electrical base element (5), which is advantageous for water- and dust-tightness. This description of the two cable entries (20) also applies to the embodiment of the socket box (1) from Figure 1 and the related figures.

**Figure 10** shows a top view of a socket according to an embodiment of the present invention.

In this embodiment, the cover (4) includes a flange that conceals the cover plate (3). This corresponds to the embodiments in the previous figures.

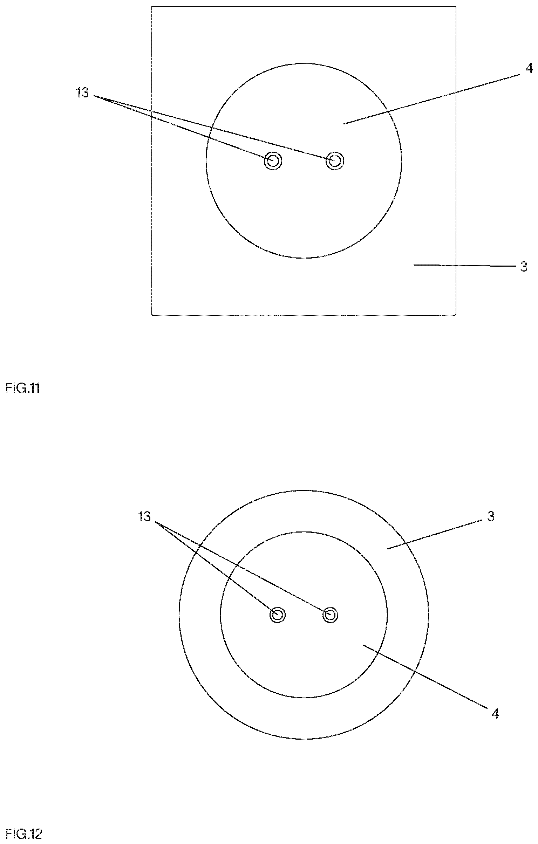

**Figure 11** shows a top view of a socket according to another embodiment of the present invention.

In this embodiment, the cover plate (3) has a square top surface and a circular opening. The cover (4) has a circular top surface. The cover (4) is flush with the cover plate (3) after being screwed into the opening in the cover plate (4). It is clear that this cover plate (3) is also suitable for an adapted version of the socket boxes (1) in Figures 1 and 2. For example, the socket boxes (1) from Figures 1 and 2 can still include the same ring-shaped cover plate (3), but with a square top surface attached to an upper edge of the ring-shaped cover plate (3), for example, welded. The thus adapted socket box (1) from Figure 2 remains suitable for clamping in a floor surface, but with the square top surface lying on top of, for example, a plank floor. Optionally, the square top surface could still be mounted flush with the floor surface by milling a square into the plank floor. The thus adapted socket box (1) from Figure 1 remains suitable for casting into a floor surface. In this case, the square top surface can still be flush with the floor surface.

**Figure 12** shows a top view of a socket according to yet another embodiment of the present invention.

This embodiment is very similar to the embodiment from Figure 11, with the difference that the cover plate (3) has a circular top surface. The description of Figure 11 applies mutatis mutandis to Figure 12.

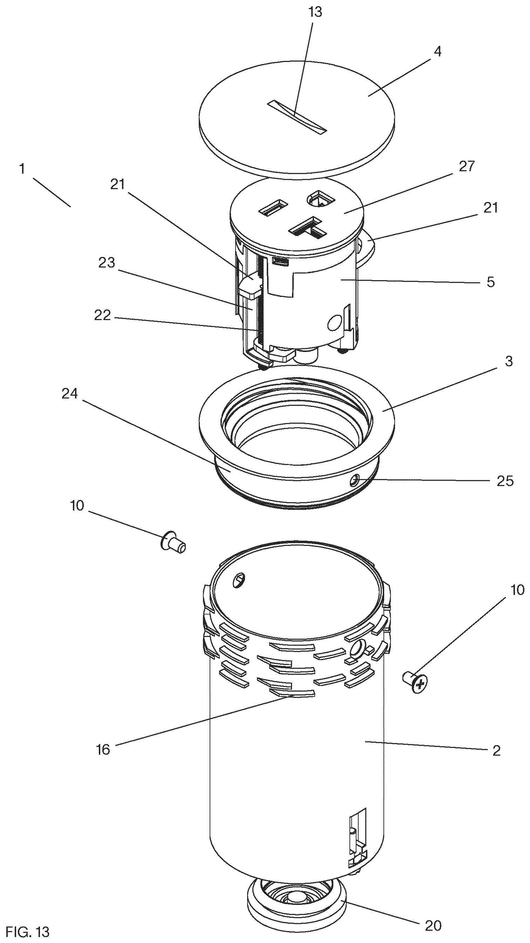

**Figure 13** shows an exploded view of a socket with an electrical base element according to yet another alternative embodiment of the present invention.

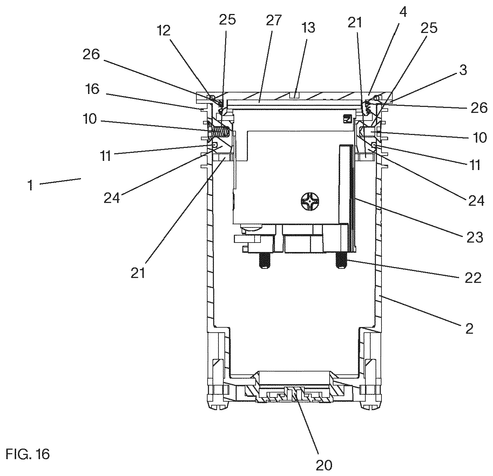

The flush-mounted box (1) from Figure 13 is very similar to the flush-mounted boxes (1) from Figure 1 and Figure 2. The descriptions of Figure 1 and Figure 2 also apply to the similar elements in Figure 13. The cover plate (3) is screwed to a side wall of the housing (2). The cover plate (3) includes an upstanding wall (24) on a lower surface. The upstanding wall (24) closely fits the side wall of the housing (2). The upstanding wall (24) forms a closed perimeter. The upstanding wall (24) includes cylindrical recesses (25) with internal thread for receiving screws (10) for fastening the cover plate (3) to the housing (2). The cylindrical recesses (25) do not penetrate the upstanding wall (24). This is clearly visible in Figure 16. The side wall of the housing (2) includes flexible protrusions (16) over a height of at least 6 mm. The protrusions (16) are regularly distributed along a perimeter of the housing (2). The housing (2) is made of a first plastic material and a second plastic material. The first plastic material is a non-flexible material. The second plastic material is a flexible material. The protrusions (16) are made of the second material. The first plastic material and the second plastic material are simultaneously applied in one mold for manufacturing the housing (2). The housing (2) includes openings for passing the screws (10) to the cylindrical recesses (25). The housing includes a single cable entry (20). The cable entry (20) is sealed with a pierceable membrane. The electrical base element (5) is a type B power socket according to the IEC 60083:2015 standard. The electrical base element (5) includes two clamps (21) for securing the electrical base element (5) in the housing (2). Each of the clamps (21) includes a clamp screw (22). The electrical base element (5) includes guides (23) for guiding the clamps (21). The guides (23) extend in a direction transverse to a top surface of the cover plate (3) along the clamp screws (22) of the clamps (21). The guides (23) are configured to prevent a rotational movement of a clamp (21) around the clamp screw (22) when the clamp (21) is in the guide (23). By tightening the clamp screws (22), the clamps (21) clamp behind the cover plate (3). This is visible in Figure 16. The electrical base element (5) includes a removable front wall (27). The removable front wall (27) includes openings for receiving pins of a plug (19). The plug (19) is in this case suitable for a type B power socket. The removable wall (27) conceals the clamp screws (22). The cover (4) includes a single indentation (13), configured for receiving, for example, a coin. It is clear that, as before, the cover (4) could include multiple indentations (13), which correspond with the pins of a plug (19) for a type B power socket.

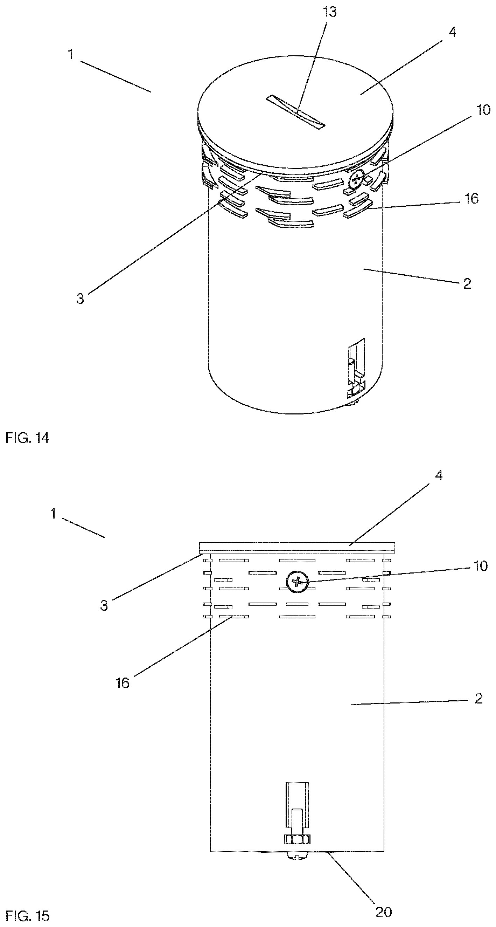

**Figure 14** shows a perspective view of the socket from Figure 13, after placement of the cover.

Figure 14 clearly shows how the protrusions (16) are regularly distributed along a perimeter of the housing (2). Also clearly visible is that the protrusions (16) are an integral part of the housing (2), unlike the socket box (1) in Figure 2. The cover (4) conceals the cover plate (3) after placement.

**Figure 15** shows a side view of the socket from Figure 13.

Clearly visible is how the screws (10) are screwed through openings in the side wall of the housing (2) and how the protrusions (16) are located near an upper wall of the housing (2).

**Figure 16** shows a cross-sectional view of the socket from Figure 13.

In Figure 16, it is visible how an O-ring (12) is placed as a seal between the cover (4) and the cover plate (3). Also visible is that the upstanding wall (24) of the cover plate (3) closely fits the side wall of the housing (2). The cylindrical recesses (25) with internal thread do not penetrate the upstanding wall (24). Under the screws (10), a seal (11) is placed between the side wall of the housing (2) and the upstanding wall (24) of the cover plate (3). The cover (4) and the cover plate (3) include complementary thread. The cover (4) is removably screwed into the opening of the cover plate (3) using the complementary thread. The cover plate (3) includes thread along a perimeter of the opening that is complementary to the thread included in the cover (4). The cover (4) includes a cylindrical wall (26) on a side facing the housing (2). The thread is applied on an outer side of the cylindrical wall (26). The electrical base element (5) is located within the cylindrical wall (26) as seen in a direction transverse to a top surface of the cover plate (3). The clamps (21) of the electrical base element (5) are clamped against an underside of the upstanding wall (24) of the cover plate (3). The removable front wall (27) of the electrical base element (5) lies in the plane formed by the top surface of the cover plate (3).

The numbered elements in the figures are as follows:
1. Socket
2. Housing
3. Cover plate
4. Cover
5. Electrical base element
6. Fastening element
7. Flexible arm
8. Cam
9. Sleeve
10. Screw for fastening cover plate
11. Seal
12. O-ring
13. Indentation
14. Ring made of flexible material
15. Screw for fixing ring made of flexible material
16. Flexible protrusion
17. Removable ring
18. Plug pin
19. Plug
20. Cable entry
21. Clamp
22. Clamp screw
23. Guide
24. Upstanding wall cover plate
25. Threaded cylindrical recesses
26. Cylindrical wall cover
27. Removable front wall electric base element

## Claims

1. Socket box for flush-mounting in a floor surface, comprising a housing for placement in the floor surface, an electrical base element, a cover plate for covering an upper side of the housing, and a cover for closing an opening in the cover plate, wherein the electrical base element is placed in the housing, and wherein the electrical base element is accessible through the opening in the cover plate, **characterized in that** a top surface of the cover plate is free of screws or bolts and wherein viewed in a direction perpendicular to the top surface of the cover plate, the opening in the cover plate is free of screws or bolts for fastening the cover plate to the housing.

2. The socket box according to claim 1, **characterized in that** viewed in a direction perpendicular to the top surface of the cover plate, the opening in the cover plate outside a perimeter of the electrical base element is free of screws or bolts for fastening the electrical base element to the cover plate or the housing.

3. The socket box according to claim 2, **characterized in that** viewed in a direction perpendicular to the top surface of the cover plate, the opening in the cover plate is free of screws or bolts for fastening the electrical base element to the cover plate or the housing.

4. The socket box according to claim 2, **characterized in that** the electrical base element comprises one or more clamps, wherein each of the one or more clamps comprises a clamp screw, wherein by tightening the clamp screws, each of the one or more clamps clamps against the side wall of the housing and/or behind the cover plate.

5. The socket box according to claim 2, **characterized in that** the electrical base element is fastened in the housing or to the cover plate using one or more screws or bolts, wherein the one or more screws or bolts are located within the perimeter of the electrical base element.

6. The socket box according to claim 4 or 5, **characterized in that** the electrical base element comprises a removable front wall, wherein the front wall is removable through the opening in the cover plate, wherein the clamp screw of the one or more clamps or the one or more screws or bolts for fastening the electrical base element in the housing are hidden behind the front wall.

7. The socket box according to any of the preceding claims 1-6, **characterized in that** the cover plate is screwed to a side wall of the housing, wherein the cover plate comprises an upstanding wall on a lower surface, wherein a seal is present between the upstanding wall and the side wall of the housing.

8. The socket box according to any of the preceding claims 1-7, **characterized in that** the cover plate and the housing are one indivisible whole.

9. The socket box according to any of the preceding claims 1-8, **characterized in that** the electrical base element is removable from the housing through the opening in the cover plate.

10. The socket box according to any of the preceding claims 1-9, **characterized in that** a side wall of the housing comprises flexible protrusions distributed over a height of at least 6 mm, wherein the protrusions are regularly distributed along a perimeter of the housing, and wherein the housing, viewed in a direction perpendicular to the cover, after fastening the cover in the opening in the cover plate, falls within the perimeter of the cover plate.

11. The socket box according to any of the preceding claims 1-10, **characterized in that** the cover and the cover plate comprise complementary threads, wherein the cover is removably screwed into the opening in the cover plate using the complementary threads, wherein the cover plate comprises thread along a perimeter of the opening that is complementary to the thread comprised in the cover, wherein the cover comprises a cylindrical wall on a side facing the housing, wherein the thread comprised in the cover is applied on an outer side of the said cylindrical wall.

12. The socket box according to claim 11, **characterized in that** a front wall of the electrical base element, viewed in a direction perpendicular to the top surface of the cover plate, is located within the said cylindrical wall.

13. The socket box according to any of the preceding claims 1-12, **characterized in that** the cover and the cover plate comprise complementary thread, wherein the cover is removably screwed into the opening in the cover plate using the complementary threads, wherein the socket box comprises a seal for forming a watertight closure between the cover and the cover plate, wherein the seal is positioned outside a perimeter of the complementary thread.

14. The socket box according to any of the preceding claims 1-13, **characterized in that** a front wall of the electrical base element lies at a distance of at most 5 mm from the top surface of the cover plate, wherein the distance is measured in a direction perpendicular to the top surface of the cover plate.

15. The socket box according to any of the preceding claims 1-14, **characterized in that** the cover plate is circular and the electrical base element has a circular cross-section, wherein a diameter of the cover plate is at most twice a diameter of the circular cross-section of the electrical base element.

16. Method for flush mounting a socket box in a floor surface, comprising the steps of:
- placing a housing and a cover plate of the socket box in a floor surface, wherein the cover plate is placed on the housing and wherein the cover plate protrudes at most 3 mm from the floor surface;
- placing an electrical base element through an opening in the cover plate into the housing;
- closing the opening in the cover plate with a cover;
**characterized in that** a top surface of the cover plate is free of screws or bolts, wherein viewed in a direction perpendicular to the top surface of the cover plate, the opening in the cover plate is free of screws or bolts for fastening the cover plate to the housing.

17. The method according to claim 16, **characterized in that** the electrical base element is clamped removably in the housing, wherein the electrical base element comprises one or more clamps, wherein each of the one or more clamps comprises a clamp screw, wherein the clamp screws are tightened, whereby each of the one or more clamps clamps against the side wall of the housing and/or behind the cover plate.

18. The method according to claim 16 or 17, **characterized in that** the cover plate is placed recessed in the floor surface, wherein a front wall of the electrical base element lies at most 5 mm lower than the floor surface.

19. Use of a socket box according to any of the claims 1-15 and/or a method according to any of the claims 16-18 for installing a power socket in a floor surface.
